# NEUE EUROPÄISCHE PATENTSCHRIFT

(11) **EP 1 837 312 B2**
(45) Veröffentlichungstag und Bekanntmachung des Hinweises auf die Entscheidung über den Einspruch: **22.07.2015**
(45) Hinweis auf die Patenterteilung: 26.05.2010
(21) Anmeldenummer: 06005593.6
(22) Anmeldetag: 20.03.2006
(51) Int. Cl.: C03C 10/12, C03C 3/083, C03C 3/095

(54) **Lithium-Aluminium-Silikatglas mit kurzen Keramisierungszeiten**
Lithium-aluminium-silicate glass with short ceramisation time
Verre de lithium-aluminium-silicate avec cycle court de céramisation

(43) Veröffentlichungstag der Anmeldung: 26.09.2007
(73) Patentinhaber: Schott AG, 55122 Mainz (DE)
(72) Erfinder: Siebers, Friedrich, Dr., 55283 Nierstein (DE); Schiffner, Ulrich, Dr., 55126 Mainz (DE); Schmidbauer, Wolfgang, Dr., 55126 Mainz-Finthen (DE); Schönberger, Klaus, Dr., 55126 Mainz (DE)
(74) Vertreter: Mehler Achler

(56) Entgegenhaltungen:
- DE-A1- 2 705 948
- DE-A1- 2 844 030
- DE-A1- 10 017 701
- DE-A1-102004 040 759
- FR-A- 2 405 906
- GB-A- 1 070 124
- US- - 4 093 468
- US-A- 4 018 612
- US-A- 4 093 468
- W. VOGEL: 'Glasfehler', 1993, SPRINGER-VERLAG, BERLIN Seiten 124 - 127
- H. SCHOLZE: 'Glas - Natur und Eigenschaften', Bd. 3, 1988, SPRINGER-VERLAG, BERLIN Seiten 217 - 222
- G. NÖLLE: 'Technik der Glasherstellung', Bd. 3, 1997, DEUTSCHER VERLAG FÜR GRUNDSTOFFINDUSTRIE, STUTTGART Seiten 37 - 40
- H.-J. ILLIG DR.-ING.: 'ABC Glas', Bd. 2, 1991, DEUTSCHER VERLAG FÜR GRUNDSTOFFINDUSTRIE, LEIPZIG Seiten 67 - 68
- H. J. MARWEDEL: 'Glastechnische Fabrikationsfehler', 1959, SPRINGER-VERLAG, BERLIN Seiten 306 - 308
- H. J. MARWEDEL ET AL.: 'Glastechnische Fabrikationsfehler', 1980, SPRINGER-VERLAG, BERLIN Seiten 391 - 397
- P. MAESTRO: 'Rare-earth and color: properties and industrial applications' JOURNAL OF THE LESS-COMMON METALS Bd. 111, 1985, Seiten 43 - 48
- L. W. RIKER: 'The use of rare earth in glass compositions', 1981, AMERICAN CHEMICAL SOCIETY Seiten 81 - 94
- W. A. WEYL: 'Coloured Glasses', 1967, SOCIETY OF GLASS TECHNOLOGY, SHEFFIELD Seite 220

## Beschreibung

Es ist generell bekannt, dass sich Gläser aus dem System Li₂O-Al₂O3-SiO₂ in Glaskeramiken mit Hochquarz-Mischkristallen oder Keatit-Mischkristallen als Hauptkristallphasen umwandeln lassen.

Die Erfindung betrifft eine Glaskeramik aus einem Lithium-Alumino-Silikatglas das sich mit kurzen Keramisierungszeiten von kleiner 2,5 Stunden bevorzugt kleiner 100 Minuten in eine transparente Glaskeramik mit Hochquarz-Mischkristallen als vorherrschende Kristallphase umwandeln lässt und dabei ohne visuell störende Lichtstreuung (Trübung) oder Eigenfarbe ist.

Eine Schlüsseleigenschaft dieser Glaskeramiken ist, dass sie in einem Temperaturbereich von Raumtemperatur bis etwa 700°C über einen äußerst niedrigen thermischen Ausdehnungskoeffizienten α_{20/700} < 1,5·10⁻⁶/K verfügen. Diese Glaskeramiken finden daher in transparenter Form Anwendung z.B. als Brandschutzglas, Kaminsichtscheiben, Kochgeschirr, Kochflächen, sowie als Substratmaterial für wafer stages oder für Spiegelträger für Teleskope und sowie für Reflektoren in Beamern.

Bei zahlreichen Anwendungen transparenter Glaskeramiken werden diese in flacher Form benötigt, beispielsweise in Form von Scheiben, als Sichtfenster für Kamine, für Brandschutzverglasungen, Kochflächen mit farbiger Unterseitenbeschichtung und Displayzwecke. Die Herstellung von solchem Flachglas aus der Glasschmelze, das als Ausgangsglas für die Herstellung von Glaskeramiken dient, erfolgt üblicherweise durch Walzen und neuerdings auch durch Floaten. Für eine wirtschaftliche Herstellung dieser Lithium-Alumino-Silikatgläser ist zum einen eine niedrige Schmelztemperatur und eine niedrige Verarbeitungstemperatur V_{A} gewünscht, zum anderen darf das Glas bei der Formgebung keine Entglasung zeigen, das heißt, es dürfen sich keine störenden Kristalle bilden, die in den Ausgangsgläsern und daraus hergestellten Glaskeramiken die Festigkeit beeinträchtigen. Bei der Formgebung über Walzen ist der letzte Kontakt der Glasschmelze mit der Ziehdüse aus Edelmetall (üblicherweise Pr/Rh), bevor das Glas durch die Walzen geformt und abgekühlt wird.

Bei der großtechnischen Herstellung von Glaskeramik wird zunächst das Ausgangsglas über übliche Glasfertigungsverfahren hergestellt. Bei der Schmelze wird typischerweise Arsen- und/oder Antimonoxid als Läutermittel eingesetzt. Diese Läutermittel sind verträglich mit den geforderten Glaskeramikeigenschaften und führen zu guten Blasenqualitäten bei der Schmelze. Auch SnO₂ wird insbesondere in Verbindung mit Hochtemperaturläuterung oberhalb 1700°C als Läutermittel eingesetzt.

Nach dem Einschmelzen und Läutern erfährt das Glas üblicherweise eine Heißformgebung durch Walzen, Gießen, Pressen oder neuerdings Floaten. Anschließend wird das Ausgangsglas durch gesteuerte Kristallisation in den glaskeramischen Artikel überführt. Diese Keramisierung erfolgt in einem zweistufigen Temperaturprozess, bei dem zunächst durch Keimbildung bei einer Temperatur zwischen 600 und 800°C Keime, üblicherweise aus ZrO₂/TiO₂-Mischkristallen, erzeugt werden. Auch SnO₂ kann an der Keimbildung beteiligt sein. Bei anschließender Temperaturerhöhung wachsen bei der Kristallisationstemperatur von 800 bis 900°C die Hochquarz-Mischkristalle auf diesen Keimen auf. Falls erwünscht, können die Hochquarz-Mischkristalle anschließend noch in Keatit-Mischkristalle umgewandelt werden. Die Umwandlung in Keatit-Mischkristalle erfolgt bei Temperaturerhöhung in einem Temperaturbereich von ca. 900 bis 1200°C. In der Regel sind Glaskeramiken mit Keatit-Mischkristallen als Hauptphase transluzent oder opak und verfügen über einen weißen Farbton, der durch Zusatz von Farboxiden verändert werden kann. Mit dem Übergang von Hochquarz- zu Keatit-Mischkristallen erhöht sich der thermische Ausdehnungskoeffizient der Glaskeramik und die Transparenz verringert sich durch die mit der Vergrößerung der Kristalle einhergehende Lichtstreuung.

Für die Qualität transparenter Glaskeramiken mit Hochquarz-Mischkristallen als Hauptkristallphase sind Transparenz und geringe Eigenfarbe maßgeblich. Transparenz bedeutet, dass die Glaskeramiken über hohe Lichttransmission im sichtbaren Bereich sowie geringe Lichtstreuung (Trübung) verfügen sollen. Die geringe Lichtstreuung wird über eine hohe Keimdichte erreicht, die dazu führt, dass die aufwachsenden Hochquarz-Mischkristalle mit ihrer Größe unterhalb des Bereiches der Wellenlänge des sichtbaren Lichtes liegen. Typischerweise liegt die mittlere Kristallitgröße der Hochquarz-Mischkristalle im Bereich 20 bis 80 nm. Eine hohe Keimdichte setzt ausreichende Gehalte an Keimbildnern sowie ausreichende Keimbildungszeiten während der Keramisierung voraus.

Nachteilig an diesen Glaskeramiken ist, dass sie regelmäßig über eine schwache Eigenfärbung verfügen, die an sich unerwünscht ist.

Die Eigenfarbe transparenter Glaskeramikplatten kann verschiedene Ursachen haben. In den Gemengerohstoffen für die Schmelzen ist das färbende Element Fe als Verunreinigung enthalten. Auch die Verwendung der Läutermittel Sb₂O₃ und CeO₂ führt zu einer geringen Eigenfarbe. Die beschriebene bräunlich gelbe Eigenfärbung der transparenten Glaskeramiken beruht maßgeblich auf elektronischen Übergängen an Farbkomplexen, die im Bereich des sichtbaren Lichtes absorbieren und an denen die für die Keimbildung notwendige Komponente, das Ti-lon, beteiligt ist. Der häufigste absorbierende Farbkomplex ist die Ausbildung von benachbarten Fe- und Ti-lonen, zwischen denen elektronische Charge-Transfer-Übergänge stattfinden. Sn/Ti-Komplexe bewirken ebenfalls eine Eigenfarbe. Die Fe/Ti-Farbkomplexe führen zu einer rotbraunen, die Sn/Ti-Farbkomplexe zu einer gelbbraunen Verfärbung. Die Ausbildung dieser benachbarten Farbkomplexe findet bereits beim Abkühlen des Ausgangsglases und insbesondere beim späteren Keramisieren der Glaskeramiken statt. In der Schmelze sind die Ionen noch gleichmäßig verteilt, beim Abkühlen, bei hohen Temperaturen und beim Keramisieren lagern sie sich bevorzugt aneinander an. Beim Keramisieren der transparenten Glaskeramiken verstärkt sich dadurch die Eigenfarbe gegenüber dem Ausgangsglas ganz beträchtlich. Durch Absorption im kurzwelligen Teil des sichtbaren Spektrum erhalten die transparenten Flachgläser und besonders die daraus hergestellten Glaskeramiken eine deutliche Eigenfarbe, die mit der Dicke stark zunimmt.

Die Keramisierung der Lithium-Alumino-Silikatgläser aus den Glaskeramiken findet üblicherweise in Rollenöfen oder Tunnelöfen statt. Um Unebenheiten der Platten während der Keramisierung zu vermeiden, ist es erforderlich, dass diese Öfen eine sehr gute Temperaturhomogenität besitzen, damit die Plattenober- und Unterseite der Ausgangsgläser gleichzeitig kristallisiert. Ansonsten kommt es verfahrensbedingt zur Verwerfungen. Wegen dieser hohen Anforderungen und der damit verbundenen hohen Anschaffungskosten der Keramisierungsöfen ist es wirtschaftlich vorteilhaft, wenn die Öfen mit hohen Durchsatz gefahren werden können, das heißt, dass die Gesamtkeramisierungszeit so kurz wie möglich gehalten wird. Dies führt aber zu dem Zielkonflikt, dass die Ausgangsgläser über eine ausreichende Menge an Keimbildnern verfügen müssen, damit bei der Umwandlung in die Glaskeramik keine Lichtstreuung an großen Kristalliten stattfindet (Tyndall-Effekt).

Um ausreichende Keimbildung sicherzustellen, sind aber Mindestgehalte des Keimbildners TiO₂ erforderlich, da dieser Keimbildner nur mit Nachteilen bei Schmelze und Entglasung durch den alternativen Keimbildner ZrO₂ ersetzt werden kann. Dies bedeutet, dass die gewünschten schnellen Keramisierungszeiten und kurzen Keimbildungszeiten über die dafür benötigten Gehalte an TiO₂ zu einer verstärkten Eigenfarbe führen.

Es hat viele Anstrengungen gegeben, diese störende, auf einem Fe/Ti-Komplex beruhende Eigenfarbe zu verringern oder zu vermeiden.

Die Verringerung des Fe-Gehaltes ist nur bis zu einem bestimmten Grad eine wirtschaftlich umsetzbare Maßnahme. Durch die großtechnisch verfügbaren Gemengerohstoffe für die Herstellung des Glases und durch Abrieb aus Anlagenteilen für die Herstellung und Homogenisierung des Gemenges entsteht immer ein gewisser Eintrag von Fe₂O₃ in das Gemenge. Aufgrund der Kosten für hochreine Rohstoffe und konstruktive anlagentechnische Sondermaßnahmen ist es wirtschaftlich nicht mehr vertretbar, in transparenten Glaskeramiken den Fe₂O₃-Gehalt unter ca. 50 ppm zu verringern. Üblicherweise liegt der Fe₂O₃-Gehalt in der Größenordnung von ca. 100 bis 500 ppm.

Ansätze zur Verringerung des Fe/Ti-Farbkomplexes beschreibt die US 4438210. Hier werden transparente Glaskeramiken mit geringer Eigenfarbe erhalten, die 2-6 Gew.-% TiO₂ und 0-2 Gew.-% ZrO₂ als Keimbildner und bis etwa 0,1 Gew.-% Fe₂O₃ als Verunreinigungen enthalten, indem die Komponente MgO im wesentlichen weggelassen wird.

Die JP 03-23237 A beschreibt die Herstellung transparenter Glaskeramiken ohne Eigenfarbe. Diese Glaskeramiken vermeiden den Zusatz von TiO₂ als Keimbildner und basieren auf einer Mischkeimbildung durch ZrO₂/SnO₂. Die dazu notwendigen SnO₂-Gehalte betragen mehr als 1 Gew.-%. Bei diesen hohen SnO₂-Gehalten verschlechtert sich jedoch die Entglasungsfestigkeit des Glases. Im Bereich der Formgebung, da bei Viskositäten um die Verarbeitungstemperatur V_{A} von 10⁴ dPas eine störende Sn-haltige Kristallphase auskristallisiert. Dadurch kommt es zu einer unzulässigen Verringerung der Festigkeit der Gläser und der daraus hergestellten Glaskeramiken. Auch hat sich gezeigt, dass hohe SnO₂-Gehalte zu einem starken Angriff der Glasschmelze auf Edelmetalleinbauten, wie Rührer, Elektroden führen. Dadurch wird die Lebensdauer der Edelmetalleinbauten verkürzt.

In der Schrift JP 05-193985 wird eine ebenfalls TiO₂-freie Glaskeramik bevorzugt für Anwendungen in Brandschutzverglasungen beschrieben, die den Zusatz von Nd₂O₃ in Gehalten von 0,2-1 Gew.-% hat, um die durch Fe-lonen erzeugte Eigenfarbe zu überfärben. Die Glaskeramiken werden durch 3-7 Gew.-% ZrO₂ gekeimt. Bei diesen hohen ZrO₂-Gehalten verschlechtert sich jedoch die Entglasungsfestigkeit des Glases im Bereich der Formgebung bei Viskositäten um die Verarbeitungstemperatur V_{A}. Es kristallisiert ZrO₂ (Baddeleyit) als störende Kristallphase aus.

GB-A-1-070 124 beschreibt ein Glas, das eine sehr stabile blaue Farbe besitzt (Seite 1, Zeile 49). Diese Farbe wird durch Nd-Oxid hervorgerufen. Das Glas besitzt im Sonnenlicht einen Blauton und im Kunstlicht einen tief rosa Ton. Anregungen, wie ein farbneutrales Glas erhalten werden kann, sind dieser Schrift nicht zu entnehmen.

FR-A-2 405 906 beschreibt eine gefärbte Wolframoxid und/oder Molybdänoxid und/oder Vanadiumoxid enthaltende Glaskeramik, die auch Neodymoxid enthalten kann. Hinweise auf ein farbneutrales Glas sind dieser Schrift nicht entnehmbar.

DE 100 17 701 A1 beschreibt eine Glaskeramik der Anmelderin, deren Grundzusammensetzung Überlappungen mit der anspruchsgemäßen Grundglaszusammensetzung besitzt. Der Schrift ist allerdings kein Hinweis darauf entnehmbar, wie diese Grundglaszusammensetzung weiterentwickelt werden müsste, um in eine farbneutrale Glaskeramik umgewandelt werden zu können.

Die US 4093468 beschreibt den Einsatz von Nd₂O₃ für die Überfärbung des durch den Fe/Ti-Farbkomplex verursachten Farbstichs. Aus dieser Schrift sind transparente Glaskeramiken nahezu ohne Eigenfarbe bekannt, die als Keimbildner TiO₂ in Gehalten 0,5-6 Gew.-% enthalten, einen Gehalt an Fe₂O₃ über Verunreinigung bis zu 500 ppm und die durch Zusatz von 0,03-0,75 Gew.-% Nd₂O₃ überfärbt werden. Diese Schrift beschreibt, dass sich das Nd₂O₃ im Gegensatz zu den üblichen Färbemitteln wie Co, Se, Cu, Cr, Mn, Ni V besonders gut dazu eignet, den durch den Fe/Ti-Farbkomplex erzeugten Farbstich zu neutralisieren.

Allerdings gibt die Schrift keinen Hinweis darauf, wie durch Optimierung der Keimbildner eine hohe Transparenz, d.h., geringe Trübung und hohe Lichttransmission in kurzen Keramisierungszeiten zu erreichen ist. Die Beispiele dieses Patentes enthalten ungünstige Keimbildnerkombinationen, so hohe TiO₂-Gerhalte oder zu geringe Keimbildnerkonzentrationen. Bedingt durch den fehlenden Einsatz der Alkalien Na₂O und K₂O besitzen die Gläser darüber hinaus eine unzureichende Entglasungfestigkeit. Über den Einfluss des Läutermittels auf die Ausbildung des Fe/Ti-Farbkomplexes wird keine Aussage gemacht.

Das Prinzip des Überfärbens eines vorhandenen, unerwünschten Farbstichs führt naturgemäß zu stärkerer Absorption des Lichts und erniedrigt damit die Lichttransmission. Da die vorhandenen Absorptionsbanden durch komplementäre Absorptionsbanden des Überfärbemittels neutralisiert werden, ergibt sich insgesamt eine erniedrigte Lichtransmission.

Ein weiteres Problem entsteht beim Recyclen der Glaskeramik. Bekanntlich wird Altglas, z.B. Behälterglas, aber auch Flachglas, in großem Umfang gesammelt und in Form von Scherben der Wiederverwertung zugeführt. Gelangt unter diese Scherben auch Glaskeramik, führt dies zu Problemen, weil die Zusammensetzungen aus dem Li₂O-Al₂O₃-SiO₂-Glassystem über höhere Schmelztemperaturen verfügen und sich dadurch beim Wiederaufschmelzen der Kalk-Natron-Gläser und deren Formgebung sehr störend bemerkbar machen. Im Bereich des Recyclings von Altscherben werden zunehmend optische Verfahren eingesetzt, die die Scherben aufgrund ihrer unterschiedlichen Absorptionsbanden trennen.

Der Erfindung liegt die Aufgabe zugrunde, ein Lithium-Alumino-Silikatglas zu finden,
- das sich mit Keramisierungszeiten von unter 2,5 Stunden in eine Glaskeramik mit Hochquarz-Mischkristallen als vorherrschende Kristallphase umwandeln lässt, die eine neutrale Farbe und eine gute Transparenz aufweist, und die eine äußerst geringe Trübung besitzt und
- das in optischen Scherbensortieranlagen aufgrund seiner optischen Eigenschaften sicher erkannt und von Gebrauchsglasscherben getrennt werden kann.

Diese Aufgabe wird durch die in Patentanspruch 1 und 4 beschriebenen Glaskeramiken umgewandelt aus Lithium-Alumino-Silikatglas gelöst.

Die Gehalte der keimbildenden Komponenten TiO₂, ZrO₂, SnO₂ müssen innerhalb relativ enger Grenzen gehalten werden. Dabei sind jedoch bestimmte Mindestgehalte dieser Verbindungen erforderlich, um bei den angestrebten kurzen Keramisierungszeiten vom weniger als 2,5 Stunden, bevorzugt weniger als 100 Minuten während der Keimbildung Keime in hoher Dichte zu erzeugen, damit nach dem Aufwachsen der Hochquarz-Mischkristalle transparente Glaskeramiken ohne Trübung realisierbar sind. Durch die hohe Keimdichte bleibt die mittlere Kristallitgröße der Hochquarz-Mischkristalle auf Werte < 80 nm begrenzt, wodurch eine störende Lichtstreuung vermieden wird. Für eine effektive Keimbildung sind Mindestgehalte an TiO₂ und ZrO₂ erforderlich.

Die Trübung (engl.: haze) soll weniger als 1 %, bevorzugt weniger als 0,5% betragen (gemessen für eine 3,6 mm dicke Platte mit beidseitig polierten Oberflächen). Trübung ist nach ASTM D 1003 der prozentuale Anteil durchgelassenen Lichts, der vom eingestrahlten Lichtbündel im Mittel um mehr als 2.5° abweicht.

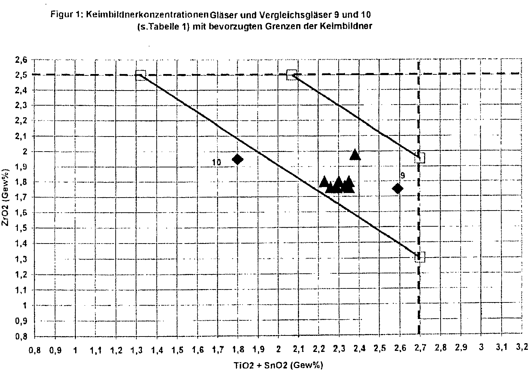

Es konnte gefunden werden, dass sich die geforderte schnelle Keramisierung und die dafür benötigten kurzen Keramisierungszeiten mit dem Keimbildnern ZrO₂, TiO₂ und SnO₂ dann erreichen lassen, wenn bestimmte Bedingungen eingehalten werden. Die Keimbildungswirkung von SnO₂ und TiO₂ (in Gew.-%) ist ungefähr gleich, weshalb diese beiden Komponenten zusammen betrachtet werden können. Die keimbildende Wirkung des ZrO₂ (in Gew.-%) ist deutlich stärker. Daher lassen sich Kombinationen der Keimbildner ZrO₂ und (TiO₂+SnO₂) mit gleicher keimbildenden Wirkung darstellen, die auf einer Geraden in einem entsprechenden Diagramm liegen (Figur 1). Für die erfindungsgemäße geringe Trübung bei kurzen Keramisierungszeiten ergibt sich eine untere Grenzgerade für den Mindestgehalt der Keimbildner:

ZrO₂ = -0,87 (TiO₂+SnO₂)+ 3,65.

Für die bevorzugte Mindestgehalte der Keimbildner (in Gew.-%) gilt damit:

ZrO₂ + 0,87 (TiO₂+SnO₂) ≥ 3,65

Zu hohe Keimbildnergehalte führen jedoch zu einer Verschlechterung des Entglasungsverhaltens bei der Formgebung, wie bereits ausgeführt wurde. Um sicherzustellen, dass die obere Entglasungstemperatur (OEG) unterhalb der Verarbeitungstemperatur V_{A} liegt, muss die obere Grenze für die Keimbildnergehalte (in Gew.-%) der Bedingung folgen:

ZrO₂ + 0,87 (TiO₂+SnO₂) ≥ 4,3

Die obere Grenze ist ebenfalls in Figur 1 dargestellt.

Zusammengefasst lautet die Beziehung:

3,65 ≤ ZrO₂ + = 0,87 (TiO₂+SnO₂) ≤ 4,3

Die Summe der TiO₂- und SnO₂-Gehalte soll allerdings 2,7 Gew.-% nicht übersteigen, weil diese Komponenten an der Bildung der für die Eigenfarbe Fe/Ti- und Sn/Ti Farbkomplexe beteiligt sind.

Weitere Grenzen ergeben sich aus der Forderung nach einer guten Entglasungsfestigkeit

ZrO₂ ≤ 2,5 Gew.-%

SnO₂ < 0,4 Gew.-%

Der Gehalt an SnO₂ soll 0,4 Gew.-% nicht übersteigen, weil es sonst bei Formgebung in der Nähe des Verarbeitungspunktes V_{A} zu einer unerwünschten Entglasung in Form einer Sn-haltigen Kristallphase kommt. Entsprechendes gilt für den Gehalt an ZrO₂, bei dem eine Obergrenze von < 2,5 Gew.-% eingehalten werden soll, damit es nicht zur Entglasung in Form einer ZrO₂-haltigen Kristallphase (Baddeleyit) kommt. Dies wird durch die obere Entglasungsgrenze ausgedrückt, die unterhalb der Verarbeitungstemperatur V_{A} liegen soll. Mit diesen Bedingungen kann in einem Diagramm (Figur 1) der zulässige Bereich der Keimbildnergehalte definiert werden. Für ZrO₂ sind Mindestgehalte von 1,3 Gew.-% und für ∑SnO₂+TiO₂ von 1,3 Gew.-% erforderlich, um eine geringe Trübung (Haze) von weniger als 1% sicherzustellen.

Bei den erfindungsgemäßen transparenten Glaskeramiken wird die störende auf Fe/Ti- und/oder Sn/Ti-Farbkomplexen beruhende Eigenfarbe durch Zusätze von Nd₂O₃ in Gehalten von 0,01 - 0,4 Gew.-% verringert. Unterhalb von 0,005 Gew.-% ist die Wirkung nicht mehr zuverlässig und oberhalb von 0,4 Gew.-% wird entweder die Transmission der Gläser schlecht (bei zu hohen Fe₂O₃-Gehalten) oder die Eigenfarbe des Nd-lons wird störend. Bevorzugt werden Gehalte von 0,02 - 0,3 Gew.-% Nd₂O₃. Ganz besonders bevorzugt wird eine obere Grenze für den N₂O₃-Gehalt von weniger als 0,2 Gew.-%. Die Gehalte Nd₂O₃ sind notwendig, um das erfindungsgemäße Ziel einer Verringerung der Eigenfarbe der gefloateten Flachgläser und der daraus hergestellten transparentren Glaskeramiken durch Überfärbung zu erreichen.

Weiterhin dienen sie dazu, die erfindungsgemäßen Glaskeramiken eindeutig zu markieren und die Recyclingfähigkeit zu verbessern.

Zusätze von Nd haben den Vorteil, dass dieses Element der rotbraunen Färbung durch Fe/Ti- bzw. der gelbbraunen Färbung durch Sn/Ti-Komplexe besonders gut entgegenwirkt. Der Farbpunkt gemessen in den verschiedenen Farbsystemen, wie z.B. im CIE- oder dem CIELAB-(kurz Lab-) Farbsystem wird durch Nd gut in Richtung des Unbuntpunktes verschoben. Weiterhin verfügt das Nd als färbendes lon aus der 4f-Gruppe des Periodensystems über sehr viele charakteristische Absorptionsbanden, die eine eindeutige Markierung ermöglichen. Bei der Umwandlung in die transparente Glaskeramik werden diese Absorptionslinien nur wenig verändert.

Die Markierung der transparenten Glaskeramik lässt sich daher sehr einfach mit handelsüblichen Spektrometern nachweisen. Dies erlaubt dem Hersteller des Originalproduktes die Wiedererkennung seines Produktes und sichert auch bei möglichen Schadensfällen eine erleichterte Zuordnung im Sinne der Produkthaftung. Eine Unterscheidung von transparenten Glaskeramiken verschiedener Hersteller ist sonst nur über aufwendige analytische Messmethoden möglich, wie sie nur in wenigen Speziallabors bereitstehen.

Die charakteristischen Absorptionslinien des Nd ermöglichen auch eine Erkennung und Trennung in Aufbereitungsprozessen beim Recycling von Altscherben aus Kalk-Natron-Glas. Besonders vorteilhaft ist der Zusatz von Nd zur Markierung wegen der charakteristischen Absorptionslinien und seiner Eigenschaft, im Infraroten zu fluoreszieren. Durch die genannten Eigenschaften kann vermieden werden, dass Scherben aus transparenter Glaskeramik, die wegen der geringen Eigenfarbe leicht z.B. mit normalen Fensterscheiben aus niedrigschmelzenden Kalk-Natron-Gläsem verwechselt werden können, in deren Aufbereitungsprozess und Wiedereinschmelzen gelangen. Die Gefahr besteht darin, dass sich durch die hohen Schmelztemperaturen der Lithium-Alumino-Silikatgläser (und -glaskeramiken) verglichen mit denen von Kalk-Natron-Gläsern nicht aufgeschmolzene Relikte bilden. Dies führt im günstigsten Fall noch zu visuell erkennbaren Relikten in den Kalk-Natron-Glasprodukten, im ungünstigsten Fall kann es zum Verstopfen von Kanälen oder Düsen im Formgebungsprozess und damit zum Totalausfall bei der Produktion der Kalk-Natron-Gläser führen.

Die Lithium-Alumino-Silikatgläser sollen weniger als 400 ppm, bevorzugt weniger als 200 ppm Fe₂O₃ enthalten. Höhere Gehalte führen dazu, dass auch höhere Gehalte des Überfärbemittels Nd benötigt werden, um den Farbstich Fe/Ti zu neutralisieren. Das führt zu niedriger Lichttransmission und einem visuell wahrnehmbaren Graustich. Die Gehalte an Fe₂O₃ sollen in wirtschaftlich vertretbarem Maße minimiert werden, geringere Gehalte als ca. 50 ppm sind wegen der hohen Kosten für Fe-arme Gemengerohstoffe nicht mehr wirtschaftlich.

Zusätze von CoO in einer Gesamtmenge bis zu 0,004 Gew.-% zum Nd-Zusatz sind vorteilhaft, um den Farbpunkt der transparenten Glaskeramik noch genauer in Richtung Unbuntpunkt einzustellen. Der Nd-Zusatz allein verschiebt den Farbpunkt nicht exakt in Richtung Unbuntpunkt, so dass diese leichte Korrektur vorteilhaft sein kann. Bevorzugt wird eine Menge von CoO von 0,0001 bis 0,004 Gew.-%. Bevorzugt wird jedoch, eine Obergrenze für das CoO von 0,003
Gew.-% nicht zu überschreiten. Für Feinkorrekturen der Farborte können auch weitere Färbemittel, wie z.B. Cr Ni, V, Cu, Mn, Ce zugesetzt werden. Die Gesamtmenge sollte 0,01 Gew.-% nicht übersteigen.

Die Oxide Li₂O, Al₂O₃ und SiO₂ sind in den bevorzugten, in den Ansprüchen angegebenen Grenzen notwendige Bestandteile der Hochquarz- und/oder Keatit-Mischkristallphasen. Ein Mindestgehalt an Li₂O von 3 Gew.-% ist im allgemeinen erforderlich, jedoch führen Li₂O-Gehalte von über 4,5 Gew.-% beim Herstellprozess häufig zu einer ungewollten Entglasung. Ein Gehalt von 3,2 bis 4,3 Gew.-% Li₂O führt zu besonders guten Ergebnissen.

Zur Vermeidung zu hoher Viskositäten des Glases und zur Unterdrückung der Neigung zu unerwünschter Entglasung von Mullit bei der Formgebung ist der Al₂O₃-Gehalt bei einem Mindestgehalt von 19 Gew.-% auf bevorzugt maximal 25 Gew.-%, insbesondere 24 Gew.-% begrenzt. Der SiO₂-Gehalt soll maximal 69 Gew.-%, insbesondere 68 Gew.-% betragen, weil diese Komponente die Viskosität des Glases stark erhöht. Somit sind für das Einschmelzen der Gläser und hinsichtlich der Temperaturbelastung bei der Formgebung höhere Gehalte von SiO₂ unvorteilhaft. Der Mindestgehalt an SiO₂ soll 55 Gew.-%, insbesondere 60 Gew.-% betragen.

Als weitere Komponenten können MgO, ZnO und P₂O₅ in die Kristallphasen eingebaut werden. Der ZnO-Gehalt ist wegen der Problematik der Bildung unerwünschter Kristallphasen wie Zn-Spinell bei der Keramisierung begrenzt auf Werte von höchstens 2,5 Gew.-%, bevorzugt höchstens 2,0 Gew.-%,. Der MgO-Gehalt ist auf maximal 2,0 Gew.-%, bevorzugt bis zu 1,5 Gew.-% begrenzt, weil er sonst den Ausdehnungskoeffizienten der Glaskeramik unzulässigerweise erhöht. Für geringe Eigenfarbe sind MgO-Gehalte von weniger als 0,8 Gew.-% und besonders von weniger als 0,6 Gew.-% vorteilhaft. Ein MgO-Mindestgehalt von 0,1 Gew.-% wird in der Regel benötigt, damit die thermische Ausdehnung der Glaskeramik nicht auf negative Werte unter -0,3 x 10⁻⁶/K fällt.

Die Zugabe der Alkalien Na₂O, K₂O, der Erdalkalien CaO, SrO, BaO, sowie von B₂O₃ verbessern die Schmelzbarkeit und das Entglasungsverhalten des Glases bei der Formgebung. Die Gehalte müssen jedoch begrenzt werden, weil diese Komponenten im wesentlichen in der Restglasphase der Glaskeramik verbleiben und die thermische Ausdehnung in unzuverlässiger Weise erhöhen. Auch können höhere Gehalte das Kristallisationsverhalten bei der Umwandlung des Glases in die Glaskeramik beeinträchtigen und wirken sich ungünstig auf die Temperaturbelastbarkeit der Glaskeramik aus. Die Summe der Alkalien Na₂O+K₂O soll mindestens 0,2 Gew.-%, bevorzugt mindestens 0,3 Gew.-% betragen. Die Zugabe von P₂O₅ kann bis zu 3 Gew.-% betragen und ist bevorzugt auf 1,5 Gew.-% begrenzt. Die Zugabe von P₂O₅ ist günstig für die Entglasungsfestigkeit, höhere Gehalte wirken sich jedoch ungünstig auf die Säurebeständigkeit aus.

Die Gläser werden unter Verwendung der für Gläser aus dem Li₂O-Al₂O₃-SiO₂-System üblichen Läutermittel Arsen- und/oder Antimonoxid geläutert. Auch SnO₂ kann insbesondere in Verbindung mit einer Hochtemperaturläuterung > 1700°C alternativ oder in Kombination in Mengen von bis zu 0,3 Gew.-% zugesetzt werden. Andere Läuterzusätze wie z.B. CeO₂, Sulfatverbindungen, Chloridverbindungen, Fluoridverbindungen können der Glasschmelze zugesetzt werden. Der Gesamtgehalt der Läutermittel und -zusätze soll 2 Gew.-% nicht übersteigen.

Der Wassergehalt der Gläser liegt, abhängig von der Wahl der Gemengerohstoffe und den Prozessbedingungen bei der Schmelze, üblicherweise zwischen 0,015 und 0,06 mol/l. Dies entspricht β_{OH}-Werten von 0,16 bis 0,64 mm⁻¹.

Das Glas besitzt eine Zusammensetzung (in Gew.-% auf Oxidbasis) von:

| | |
|---|---|
| Li₂O | 3,0-4,5 |
| Na₂O | 0-1,5 |
| K₂O | 0-1,5 |
| ∑Na₂O+K₂O | 0,2-2,0 |
| MgO | 0-2,0 |
| CaO | 0-1,5 |
| SrO | 0-1,5 |
| BaO | 0-2,5 |
| ZnO | 0-2,5 |
| B₂O₃ | 0-1,0 |
| Al₂O₃ | 19-25 |
| SiO₂ | 55-69 |
| TiO₂ | 1,4-2,7 |
| ZrO₂ | 1,3-2,5 |
| SnO₂ | 0,1-0,4 |
| ∑SnO₂+TiO₂ | < 2,7 |
| P₂O₅ | 0-3,0 |
| ∑ZrO₂+0,87 (TiO₂+SnO₂) | 3,65-4,3 |
| Fe₂O₃ | ≤ 0,04 |
| Nd₂O₃ | 0,01-0,4 |
| CoO | 0-0,004 |

ggf. mit Zusätzen chemischer Läutermittel wie As₂O₃, Sb₂O₃, CeO₂ und optional weiterer Läuterzusätze, wie zum Beispiel Sulfatverbindungen, Chloridverbindungen, Fluoridverbindungen in Gesamtmengen bis zu 2 Gew.-%, wobei SnO2 als Läutermittel in Kombination mit einer Hochtemperaturläuterung oberhalb 1700 °C eingesetzt wird. Der Nd-Gehalt ist in diesen Angaben umgerechnet auf Oxidbasis (Nd₂O₃), wobei die Art des Nd-Zusatzes im Gemenge nicht auf das angegebene Oxid beschränkt ist, sondern beliebige Nd-Verbindungen zugesetzt werden können.

In einer besonders bevorzugten Ausführungsform der Erfindung besitzt das Glas eine Zusammensetzung in Gew.-% auf Oxidbasis von:

| | |
|---|---|
| Li₂O | 3,2-4,3 |
| Na₂O | 0,2-1,0 |
| K₂O | 0-0,8 |
| ∑Na₂O+K₂O | 0,3-1,5 |
| MgO | 0,1-1,5 |
| CaO | 0-1,0 |
| SrO | 0-1,0 |
| BaO | 0-2,5 |
| ZnO | 0-2,0 |
| Al₂O₃ | 19-24 |
| SiO₂ | 60-68 |
| TiO₂ | 1,4-2,7 |
| ZrO₂ | 1,3-2,2 |
| SnO₂ | 0,1-0,3 |
| ∑SnO₂+TiO₂ | < 2,7 |
| P₂O₅ | 0-1,5 |
| Nd₂O₃ | 200-3000 ppm |
| CoO | 0-30 ppm |

ggf. mit Zusätzen chemischer Läutermittel wie As₂O₃, Sb₂O₃, CeO₂ und Läuterzusätzen wie Sulfat-, Chlorid-, Fluoridverbindungen in Gesamtgehalten bis zu 1,5 Gew.-%, wobei SnO2 als Läutermittel in Kombination mit einer Hochtemperaturläuterung oberhalb 1700 °C eingesetzt wird.

Bei niedrigen Läutermittelgehalten von As₂O₃, Sb₂O₃ und/oder auch SnO₂, kann es erforderlich sein, die chemische Läuterung mit einer Hochtemperaturläuterung oberhalb 1700°C zu kombinieren, falls gute Blasenqualitäten mit Blasenzahlen von unter 5 Blasen/kg Glas (bezogen auf Blasengrößen größer als 0,1 mm) gewünscht sind.

Für die Eigenfarbe ist es besonders günstig, wenn die Glaskeramikplatte als Läutermittel As₂O₃, ggf. mit weiteren Läuterzusätzen wie Sulfat-, Chlorid-, Fluoridverbindungen in Gesamtgehalten bis zu 1 Gew.-% enthält und ohne die Läutermittel Sb₂O₃ und SnO₂ geläutert ist.

Durch die Verwendung von 0,1-0,4 Gew.-% SnO₂ als Läutermittel in Kombination mit einer Hochtemperaturläuterung oberhalb 1700°C ist es möglich, auf die unter Umweltgesichtspunkten ungünstigen Läutermittel As₂O₃, Sb₂O₃ zu verzichten und entglasungsstabile Ausgangsgläser (OEG < V_{A}) mit guten Blasenqualitäten zu erhalten. Da jedoch Sn mit Ti einen gefärbten Sn/Ti-Komplex bildet, wird zum Läutern eine Menge von 0,1 bis 0,3 Gew.-% SnO₂ bevorzugt.

Das Lithium-Alumino-Silikatglas ist typischerweise gekennzeichnet durch eine Verarbeitungstemperatur V_{A} unter 1350°C, um die Einschmelzbarkeit des Glases zu begünstigen und um die thermische Belastung der Anlagenkomponenten bei der Formgebung zu begrenzen. Die obere Entglasungstemperatur OEG liegt dabei unterhalb der Verarbeitungstemperatur V_{A}.

Nach Umwandlung in die transparente Glaskeramik mit Hochquarz-Mischkristallen als Hauptkristallphase soll der thermische Ausdehnungskoeffizient α_{20/700} nicht mehr als 0,5·10⁻⁶/K von der Nullausdehnung abweichen. Bevorzugt soll die Abweichung weniger als 0,3·10⁻⁶/K betragen. Mit den niedrigen thermischen Ausdehnungskoeffizienten wird eine hohe Temperaturunterschiedsfestigkeit der Glaskeramik erreicht. Eine bevorzugte Ausgestaltung der Erfindung besteht darin, neben der geringen Trübung auch eine geringe Eigenfarbe und eine hohe Lichttransmission bereitzustellen. Die transparente Glaskeramik verfügt dann über eine Trübung mit Haze-Wert < 1 %, bevorzugt < 0,5% (bei 3,6 mm Dicke), in Transmission bei 4 mm Dicke über eine Buntheit im CIELAB-Farbsystem von C* < 3,5 und eine Lichttransmission (brightness) Y von > 80%, bevorzugt > 85%. Diese Kombination von Eigenschaften ist möglich mit den aufeinander abgestimmten erfindungsgemäß niedrigen Fe₂O₃-Gehalten, der Beschränkung der Gehalte der Überfärbungsmittel Nd₂O₃ auf weniger als 2000 ppm und CoO auf weniger als 20 ppm in Kombination mit den genau definierten Gehalten an den Keimbildnern TiO₂, SnO₂ und ZrO₂.

Die Lithium-Alumino-Silikatgläser können durch eine zusätzliche Temperaturbehandlung bei Temperaturen zwischen ca. 900 und 1200°C in eine Keatit-Mischkristall enthaltende Glaskeramik umgewandelt werden. Glaskeramiken dieses Typs verfügen über eine höhere Temperaturbelastbarkeit, allerdings zu Lasten einer Erhöhung des thermischen Ausdehnungskoeffizienten, der zwischen Raumtemperatur und 700°C weniger als 1,5·10⁻⁶/K betragen soll. Aufgrund des mit der Umwandlung einhergehenden Kristallwachstums haben sie ein transluzent bis opak weißes Aussehen. Die Trübung liegt in der Regel bei Haze-Werten von > 50%.

Vorzugsweise findet die aus dem Lithium-Alumino-Silikatglas durch Keramisierung hergestellte transparente, farbarme Glaskeramik mit Hochquarz-Mischkristallen Verwendung als Brandschutzglas, Kaminsichtscheibe, Backofensichtscheibe, insbesondere für Pyrolyseherde, Abdeckungen von Leuchten hoher Energie. Durch Aufbringen einer lichtabsorbierenden Unterseitenbeschichtung lässt sich aus der transparenten Glaskeramik eine farbige Kochfläche mit der geforderten Lichttransmission herstellen. Nach Umwandlung in eine Glaskeramik mit Keatit-Mischkristallen als Hauptkristallphase findet diese in transluzenter oder opaker Form bevorzugt Verwendung als Kochfläche oder als Abdeckplatte in Mikrowellenherden.

Die vorliegende Erfindung wird mit Hilfe der folgenden Beispiele weiter deutlich.

Für einige Ausführungsbeispiele sind in Tabelle 1 Zusammensetzungen und Eigenschaften der Lithium-Alumino-Silikatgläser aufgeführt. Dabei handelt es sich bei Glas 2 um ein Ausgangsglas für eine erfindungsgemässe Glaskeramik und bei den Gläsern 1 und 3 bis 8 um nicht erfindungsgemäße Gläser und bei den Gläsern 9 und 10 um Vergleichsgläser außerhalb der vorliegenden Erfindung. Das Vergleichsglas Nr. 10 wurde der US 4093468 (Beispiel B) entnommen.

Tabelle 1 zeigt die Zusammensetzungen der Ausgangsgläser Nr. 1 bis 8 und die Ausgangsgläser 9 und 10 für die Vergleichsbeispiele.

In Tabelle 1 sind auch die Eigenschaften im glasigen Zustand, wie z.B.: Transformationstemperatur Tg, Verarbeitungstemperatur V_{A}, obere Entglasungsgrenze OEG, thermische Ausdehnung zwischen Raumtemperatur und 300°C, sowie die Dichte aufgeführt. Aufgrund der Zusammensetzung, insbesondere der Keimbildnergehalte, liegt die obere Entglasungsgrenze unterhalb der Verarbeitungstemperatur V_{A}. In Tabelle 1 sind bei den Zusammensetzungen auch die durch Rohstoffverunreinigungen bedingten Fe₂O₃-Gehalte aufgeführt. Der Wassergehalt der Gläser beträgt 0,03-0,05 mol/l, entsprechend β_{OH}-Werten von 0,32 bis 0,53 mm⁻¹.

Die Ausgangsgläser von Tabelle 1 wurden aus in der Glasindustrie üblichen Rohstoffen bei Temperaturen von ca. 1620°C geschmolzen und geläutert. Nach dem Schmelzen in Tiegeln aus gesintertem Kieselglas wurden die Schmelzen in Pt/Rh-Tiegel mit Innentiegel aus Kieselglas umgegossen und bei Temperaturen von 1550°C, 30 Minuten durch Rühren homogenisiert. Nach 2-stündigem Abstehen bei 1640°C wurden Gussstücke von ca. 140x100x30 mm Größe gegossen und in einem Kühlofen, beginnend ab ca. 660°C auf Raumtemperatur abgekühlt. Die Gussstücken wurden in die für die Untersuchungen und für die Keramisierung benötigten Größen unterteilt.

Die Keramisierungen der Ausgangsgläser erfolgte mit den folgenden Temperatur/Zeit-Programmen:
Keramisierungsprogramm 1, (Gesamtzeit 147min):
   Aufheizen innerhalb von 50 Minuten von Raumtemperatur auf 790°C 30 Minuten Haltezeit bei 790°C
   Aufheizen innerhalb von 30 Minuten von 790 auf 900°C
   7 Minuten Haltezeit bei 900°C
   Abkühlen innerhalb von 30 Minuten von 900 auf 750°C
   schnelle Abkühlung auf Raumtemperatur
Keramisierungsprogramm 2, (Gesamtzeit 96min):
   Aufheizen innerhalb von 38 Minuten von Raumtemperatur auf 790°C 14 Minuten Haltezeit bei 790°C
   in 24 Minuten von 790 auf 910°C
   10 Minuten Haltezeit bei 910°C
   Abkühlen innerhalb von 10 Minuten von 910 auf 800°C
   schnelle Abkühlung auf Raumtemperatur
Keramisierungsprogramm 3, (Herstellen von Keatit-Mischkristall-Glaskeramik):
   Aufheizen innerhalb von 33 Minuten von Raumtemperatur auf 790°C 30 Minuten Haltezeit bei 790°C
   weiteres Aufheizen innerhalb von 32 Minuten von 790°C auf Maximaltemperatur Tₘₐₓ
   7 Minuten Haltezeit bei Tₘₐₓ
   schnelle Abkühlung auf Raumtemperatur

Die Tabellen 2 und 3 zeigen die Eigenschaften der transparenten Glaskeramiken mit Hochquarz-Mischkristallen als vorherrschende Kristallphase, die mit den Keramisierungsprogrammen 1 bzw. 2 hergestellt wurden. Die Beispiele 9 und 10 bzw. 19 und 20 sind Vergleichskeramiken außerhalb der Erfindung. Die Beispiele 1 und 3 bis 8 und 11 und 13 bis 18 sind nichterfindungsgemäss. Die Transmissionsmessungen wurden an polierten Platten von 4 mm Dicke mit Normlicht C, 2°, durchgeführt. Neben den Farbkoordinaten L*, a*, b* im CIELAB-System sind auch die Farbkoordinaten x, y im CIE-System aufgeführt. Die erfindungsgemäßen Glaskeramiken belegen die vorteilhafte Wirkung des Einsatzes von Nd und optional zusätzlich von Co zur Verringerung der störenden Eigenfarbe. Auch der Yellowness-Index nach Norm ASTM 1925/70 (77, 85) ist wie die Buntheit C* ein Maß für die Eigenfarbe. Es werden auch hohe Werte der Lichttransmission (Helligkeit) Y erreicht. Die Trübung wurde bei Normlicht C an beidseitig polierten 3,6 mm dicken Platten mit einem kommerziellen Messgerät "haze-guard plus" der Firma BYK-Gardner gemessen und durch den Haze-Wert charakterisiert.

Für die Keramisierungsprogramme mit Gesamtzeiten von 147 min. und 96 min. werden durch die Wahl der Keimbildner geringe Trübungsgrade (Haze-Werte) erreicht.

Für das Keramisierungsprogramm 1 sind in Tabelle 2 zusätzlich Eigenschaftswerte der Glaskeramik, wie Infrarottransmission bei 1600 nm, thermische Ausdehnung zwischen 20 und 700°C, Dichte und der mittels Röntgenbeugung gemessene Phasengehalt der Hauptkristallphase, bestehend aus Hochquarz-Mischkristallen, sowie die mittlere Kristallitgröße aufgezeigt.

Zusätzlich wurden einige Beispiele mit dem Keramisierungsprogramm 3 in transluzente Glaskeramiken mit Keatit-Mischkristallen als vorherrschende Kristallphase umgewandelt und deren Eigenschaften sowie Phasengehalte und Kristallgrößen bestimmt (Tabelle 4). Die Maximaltemperaturen Tₘₐₓ bei der Herstellung sind in der Tabelle angegeben. Die Lichttransmission Y und die IR-Transmission bei 1600 nm wurden an 3,6 mm dicken Platten gemessen. Die Farbwerte L*, a*, b* wurden in Remission (Auflicht) an 3,6 mm dicken polierten Platten mit dem Messgerät Mercury 2000 (Fa. Datacolor, Lawrenceville, USA), Normlicht C, 2° bestimmt. Die Haze-Werte der Beispiele (polierte Platten 3,6 mm Dicke) betragen mehr als 90%.

Figur 1 zeigt eine Auftragung der Keimbildnerkonzentration der Glaskeramiken und der Vergleichskeramiken (Ausgangsgläser 9,10) in den angegebenen Grenzen.

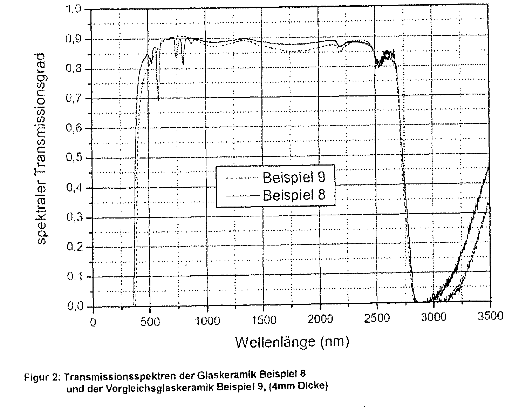

Figur 2 zeigt die Transmissionsspektren der Glaskeramik Beispiel 8 und der Vergleichsglaskeramik Beispiel 9. Das Vergleichsbeispiel zeigt die störende Färbung verbunden mit hohem Yellowness-Index und Buntheit C*. Die Glaskeramik zeigt die charakteristischen Absorptionsbanden des Nd-lons, die sich hervorragend auch zur Markierung der erfindungsgemäßen Glaskeramikplatten eignen. Darüber hinaus vereinfacht der Nd₂O₃-Zusatz auch die Recyclingfähigkeit der Glaskeramik durch optische Scherbentrennverfahren aufgrund des Absorptionsbanden und der Infrarotfluoreszenz des Nd-lons.

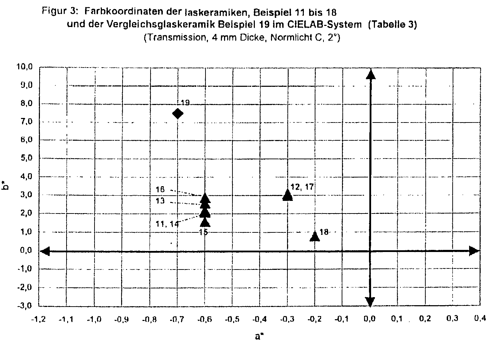

Figur 3 zeigt die Farbkoordinaten der Glaskeramiken 11 bis 18 und der Vergleichsglaskeramik Beispiel 19 im CIELAB.System. Die Vergleichsglaskeramik Beispiel 20 ist aufgrund der hohen Trübung (milchiges Aussehen) nicht sinnvoll einzuordnen.

**Tabelle 1: Zusammensetzungen und Eigenschaften der Ausganglsgläser und Vergleichsgläser 9 und 10**

| **Glas: Nr.** | | **1** | **2** | **3** | **4** | **5** | **6** | **7** | **8** | **9** | **10** |
|---|---|---|---|---|---|---|---|---|---|---|---|
| **Zusammensetzungen in Gew% auf Oxidbasis.** | | | | | | | | | | | |
| Al2O3 | | 21,3 | 21,3 | 21,8 | 21,65 | 20,0 | 19,95 | 20,1 | 20,0 | 19,9 | 21,3 |
| BaO | | - | - | 1,98 | 1,95 | 0,80 | 0,84 | 0,82 | 1,21 | 0,9 | 1,3 |
| K2O | | 0,13 | 0,11 | - | - | 0,20 | 0,20 | 0,20 | - | 0,22 | - |
| Li2O | | 3,75 | 3,70 | 3,69 | 3,64 | 3,54 | 3,75 | 3,65 | 3,63 | 3,6 | 2,7 |
| MgO | | 0,85 | 1,05 | 0,58 | 0,59 | 1,15 | 1,06 | 1,10 | 0,77 | 1,2 | 1,0 |
| Na2O | | 0,35 | 0,36 | 0,52 | 0,50 | 0,15 | 0,16 | 0,15 | 0,45 | 0,20 | - |
| P2O5 | | - | - | - | - | - | - | | - | - | 0,7 |
| SiO2 | | 67,55 | 67,35 | 65,3 | 65,2 | 68,1 | 67,35 | 67,4 | 67,22 | 67,2 | 62,0 |
| ZnO | | 1,57 | 2,0 | 1,70 | 1,57 | 1,48 | 1,60 | 1,54 | 1,57 | 1,55 | 6,0 |
| | | | | | | | | | | | Ca0 0,50 |
| SnO2 | | - | 0,11 | - | - | - | - | | - | - | - |
| TiO2 | | 2,23 | 2,19 | 2,29 | 2,38 | 2,26 | 2,35 | 2,35 | 2,33 | 2,59 | 1,8 |
| ZrO2 | | 1,76 | 1,80 | 1,76 | 1,98 | 1,76 | 1,80 | 1,76 | 1,77 | 1,75 | 2,0 |
| | | | | | | | | | | | |
| As2O3 | | 0,40 | - | 0,28 | 0,43 | 0,40 | 0,86 | 0,85 | 0,86 | 0,86 | 0,7 |
| Sb2O3 | | - | - | - | - | - | - | - | - | - | - |
| | | | | | | | | | | | |
| Nd2O3 | | 0,09 | 0,02 | 0,08 | 0,09 | 0,14 | 0,06 | 0,06 | 0,17 | - | 0,15 |
| Fe2O3 | ppm | 200 | 100 | 180 | 200 | 200 | 140 | 150 | 160 | 290 | 100 |
| CoO | ppm | - | - | - | - | - | - | - | 5 | - | - |
| NiO | ppm | - | - | - | - | - | - | 23 | - | - | - |
| | | | | | | | | | | | |
| Tg | °C | 681 | 685 | 676 | 687 | 692 | 669 | 682 | 672 | 673 | 673 |
| **V_{A}** | °C | 1320 | 1320 | 1306 | - | 1335 | 1315 | - | 1325 | 1304 | 1281 |
| **OEG** | °C | 1240 | 1270 | 1250 | - | 1255 | 1280 | - | 1265 | 1265 | 1340 |
| **α_{20/300}** | 10⁻⁶/K | 3,87 | 3,88 | 4,08 | 4,05 | 3,79 | 3,90 | 3,90 | 3,91 | 3,87 | 3,56 |
| **Dichte** | g/cm³ | 2,436 | 2,446 | 2,472 | 2,479 | 2,444 | 2,451 | 2,450 | 2,447 | 2,454 | 2,562 |

**Tabelle 2: Eigenschaften der Glaskeramiken und Vergleichsglaskeramiken Beispiel 9 und 10, (Keramisierungsprogramm 1)**

| **Beispiel Nr** | | **1** | **2** | **3** | **4** | **5** | **6** | **7** | **8** | **9** | **10** |
|---|---|---|---|---|---|---|---|---|---|---|---|
| Glas Nr. | | **1** | **2** | **3** | **4** | **5** | **6** | **7** | **8** | **9** | **10** |
| **Transmission** | 4mm Dicke % | | | | | | | | | | |
| Normlicht C, 2° Lichttransmission Y Yellowness Index | | 87,0 | 87,3 | 87,7 | 86,3 | 85,6 | 87,2 | 85,6 | 83,8 | 84,8 | 72,2 |
| | | 3,3 | 5,4 | 3,5 | 4,0 | 2,8 | 5,8 | 6,3 | 2,1 | 15,0 | 25,0 |
| x | | 0,3126 | 0,3148 | 0,3128 | 0,3133 | 0,3121 | 0,3150 | 0,3156 | 0,3117 | 0,3239 | 0,3338 |
| y | | 0,3197 | 0,3215 | 0,3199 | 0,3206 | 0,3195 | 0,3222 | 0,3223 | 0,3183 | 0,3319 | 0,3443 |
| L* | | 94,6 | 94,8 | 94,9 | 94,3 | 94,0 | 94,7 | 94,1 | 93,3 | 93,6 | 87,7 |
| a* | | -0,5 | -0,3 | -0,4 | -0,6 | -0,6 | -0,5 | -0,3 | -0,2 | -0,7 | -1,2 |
| b* | | 1,8 | 2,8 | 1,9 | 2,2 | 1,6 | 3,1 | 3,2 | 1,1 | 8,1 | 13,4 |
| C* | | 1,8 | 2,8 | 1,9 | 2,2 | 1,7 | 3,1 | 3,2 | 1,1 | 8,1 | 13,6 |
| **IR-Transmisson** | 4mm Dicke % | 87,7 | 89,5 | 89,1 | 87,9 | 87,7 | 89,0 | 87,9 | 88,3 | 85,7 | 89,6 |
| 1600nm | | | | | | | | | | | |
| α_{20/700} | 10⁻⁶/K | -0,26 | -0,05 | -0,10 | +0,03 | +0,11 | -0,07 | +0,10 | -0,05 | +0,14 | -0,07 |
| Dichte | g/cm³ | 2,519 | 2,526 | 2,545 | 2,550 | 2,534 | 2,543 | 2,538 | 2,544 | 2,546 | 2,628 |
| **Röntgenbeugung:** | | | | | | | | | | | |
| Hochquarz-Phasengehalt Kristallitgröße | % | 73 | 72 | 71 | 68 | 71 | 76 | 72 | 71 | 75 | 71 |
| | nm | 33 | 32 | 40 | 37 | 28 | 40 | 30 | 33 | 41 | 73 |
| **Trübung** | 3,6mm Dicke % | | | | | | | | | | |
| Haze | | 0,28 | 0,28 | 0,50 | 0,42 | 0,27 | 0,23 | 0,25 | 0,32 | 0,20 | 2,7 (milchig) |

**Tabelle 3: Eigenschaften Glaskeramiken und Vergleichsglaskeramiken Beispiel 19 und 20, (Keramisierungsprogramm 2)**

| **Beispiel Nr.** | | **11** | **12** | **13** | **14** | **15** | **16** | **17** | **18** | **19** | **20** |
|---|---|---|---|---|---|---|---|---|---|---|---|
| **Glast Nr.** | | **1** | **2** | **3** | **4** | **5** | **6** | **7** | **8** | **9** | **10** |
| **Transmission** | 4mm Dicke % | | | | | | | | | | |
| Normlicht C, 2° Licht transmission Y Yellowness Index | | 86,5 | 86,6 | 86,8 | 86,1 | 85,6 | 87,6 | 85,1 | *84,0* | 85,4 | 69,9 |
| | | 4,1 | 5,8 | 4,9 | 3,9 | 2,8 | 5,4 | 6,1 | *1,6* | 13,8 | 26,0 |
| x | | 0,3133 | 0,3152 | 0,3141 | 0,3131 | 0,3121 | 0,3146 | 0,3154 | *0,3112* | 0,3228 | 0,3351 |
| y | | 0,3207 | 0,3220 | 0,3214 | 0,3204 | 0,3195 | 0,3220 | 0,3222 | *0,3178* | 0,3307 | 0,3447 |
| L* | | 94,4 | 94,5 | 94,5 | 94,2 | 94,0 | 94,8 | 93,9 | *93,4* | 93,9 | 86,6 |
| a* | | -0,6 | -0,3 | -0,6 | -0,6 | -0,6 | -0,6 | -0,3 | *-0,2* | -0,7 | -1,3 |
| b* | | 2,2 | 3,0 | 2,6 | 2,1 | 1,6 | 2,9 | 3,1 | *0,8* | 7.5 | 13,7 |
| C* | | 2,3 | 3,0 | 2,7 | 2,2 | 1,7 | 3,0 | 3,1 | *0,8* | 7,5 | 13,8 |
| **Trübung)** | 3,6mm Dicke % | | | | | | | | | | |
| Haze | | 0,31 | 0,34 | 0,65 | 0,52 | 0,27 | 0,28 | 0,39 | 0,29 | 0,27 | 5,96 (mitching) |

**Tabelle 4: Eigenschaften nach Umwandlung in Keatit-Glaskeramik, (Keramisierungsprogramm 3)**

| **Beispel Nr**. | | **21** | **22** | **23** | **24** | **25** | **26** | **27** | **28** | **29** | **30** |
|---|---|---|---|---|---|---|---|---|---|---|---|
| **Glas Nr**. | | **1** | **2** | **3** | **4** | **5** | **6** | **7** | **8** | **9** | **10** |
| **Maximaltemperatur** | °C | 1110 | 1120 | 1100 | 1100 | 1110 | 1090 | 1100 | 1090 | 1080 | 1080 |
| Tₘₐₓ | | | | | | | | | | | |
| **Transmission** | 3.6mm Dicke | | | | | | | | | | |
| Normlichl C, 2° | | | | | | | | | | | |
| Lichttransmission Y | % | 8,0 | 9,0 | 5.0 | 6,4 | 8,7 | 4,5 | 5,1 | 5,0 | 3,9 | 0,7 |
| IR-Transmission 1600nm | % | 80,9 | 79,9 | 67,1 | 68.3 | 68,6 | 49,8 | 54,5 | 58,6 | 56,1 | 4,9 |
| **Farbe (Remission)** | 3,6mm Dicke % | | | | | | | | | | |
| L* | | 84,95 | 84,51 | 89,57 | 87,79 | 84,33 | 90,91 | 88,75 | 87,22 | 87,32 | 96,08 |
| a* | | -3,80 | -3,29 | -2,04 | -2,73 | -2,91 | -1,71 | -1,14 | -1,52 | -1,02 | -0,01 |
| b* | | -7,43 | -6,23 | -4,80 | -6,30 | -8,98 | -2,98 | -5,17 | -7,56 | -2,36 | -1,27 |
| c* | | 8,34 | 7,04 | 5,22 | 6,87 | 9,44 | 3,44 | 5,30 | 7,71 | 2,57 | 1.27 |
| α_{20/100} | 10⁻⁶/K | +0,86 | +0,91 | +1,2 | +1,26 | +0,95 | +1,00 | +1,00 | +1,02 | +1,05 | +1,33 |
| Dichte | g/cm³ | 2,515 | 2,515 | 2,538 | 2,544 | 2,512 | 2,513 | 2,513 | 2,522 | 2,516 | 2,593 |
| **Röntgenbeugung:** | | - | | - | | - | | - | | | |
| Keatit-Phasengehall | % | | 88 | | 83 | | 86 | | 85 | 89 | 70-75 |
| Keatit-Kristallituröße | nm | | - | | >120 | | 99 | | >120 | - | |

## Patentansprüche

1. Transparente Glaskeramik, umgewandelt aus einem Lithium-Aluminosilikatglas mit einer Zusammensetzung von:
| | |
|---|---|
| Li₂O | 3,0-4,5 |
| Na₂O | 0-1,5 |
| K₂O | 0-1,5 |
| ∑Na₂O+K₂O | 0,2-2,0 |
| MgO | 0-2,0 |
| CaO | 0-1,5 |
| SrO | 0-1,5 |
| BaO | 0-2,5 |
| ZnO | 0-2,5 |
| B₂O₃ | 0-1,0 |
| Al₂O₃ | 19-25 |
| SiO₂ | 55-69 |
| TiO₂ | 1,4-2,7 |
| ZrO₂ | 1,3-2,5 |
| SnO₂ | 0,1-0,4 |
| ∑SnO₂+TiO₂ | < 2,7 |
| P₂O₅ | 0-3,0 |
| ∑ZrO₂+0,87 (TiO₂+SnO₂) | 3,65 - 4,3 |
| Fe₂O₃ | ≤ 0,04 |
| Nd₂O₃ | 0,01 - 0,4 |
| CoO | 0-0,004 |
wobei die Glaskeramik Hochquarz-Mischkristalle als vorherrschende Kristallphase, eine Trübung von weniger als 1% nach ASTM D 1003 und einen neutralen Farbton aufweist,
wobei SnO₂ als Läutermittel in Kombination mit einer Hochtemperaturläuterung oberhalb 1700°C eingesetzt wird,
gegebenenfalls mit Zusätzen chemischer Läutermittel wie As₂O₃, Sb₂O₃, CeO₂ und Läuterzusätzen wie Sulfat-, Chlorid-, Fluoridverbindungen in Gesamtgehalten bis zu 2,0 Gew.-%.

2. Glaskeramik nach Anspruch 1, umgewandelt aus einem Lithium-Alumino-Silikatglas mit einem Gehalt (in Gew.-% auf Oxidbasis) von:
| | |
|---|---|
| Li₂O | 3,2-4,3 |
| Na₂O | 0,2-1,0 |
| K₂O | 0-0,8 |
| ∑Na₂O+K₂O | 0,3-1,5 |
| MgO | 0,1-1,5 |
| CaO | 0-1,0 |
| SrO | 0-1,0 |
| BaO | 0-2,5 |
| ZnO | 0-2,0 |
| Al₂O₃ | 19-24 |
| SiO₂ | 60-68 |
| TiO₂ | 1,4-2,7 |
| ZrO₂ | 1,3-2,2 |
| SnO₂ | 0,1-0,3 |
| ∑SnO₂+TiO₂ | < 2,7 |
| P₂O₅ | 0-1,5 |
| Nd₂O₃ | 0,02-0,3 |
| CoO | 0-0,003 |
wobei SnO₂ als Läutermittel in Kombination mit einer Hochtemperaturläuterung oberhalb 1700°C eingesetzt wird,
gegebenenfalls mit Zusätzen chemischer Läutermittel wie As₂O₃, Sb₂O₃, CeO₂ und Läuterzusätzen wie Sulfat-, Chlorid-, Fluoridverbindungen in Gesamtgehalten bis zu 1,5 Gew.-%.

3. Glaskeramik nach einem der vorhergehenden Ansprüche, umgewandelt aus einem Lithium-Alumino-Silikatglas mit einem MgO-Gehalt von < 0,8 bevorzugt < 0,6 Gew.-%.

4. Glaskeramik umgewandelt aus einem Lithium-Alumino-Silikatglas mit einer Zusammensetzung nach einem der vorhergehenden Ansprüche, mit einem Gehalt von
Nd₂O₃ < 0,2 Gew.-%, CoO < 0,002 Gew.-% und einem thermischen Ausdehnungskoeffizienten α_{20/700} von 0±0,5·10⁻⁶/K, bevorzugt 0±0,3·10⁻⁶/K, einer Lichttransmission bei 4 mm Dicke von größer 80% und einer Buntheit im CIELAB-Farbsystem C* < 3,5.

5. Verwendung der Glaskeramik nach einem der vorhergehenden Ansprüche als Brandschutzglas, Kaminsichtscheibe, Backofensichtscheibe, Kochfläche mit Unterseitenbeschichtung und Abdeckung im Beleuchtungssektor.

## Claims

1. Transparent glass-ceramic, converted from a lithium aluminosilicate glass having a composition of:
| | |
|---|---|
| Li₂O | 3.0-4.5 |
| Na₂O | 0-1.5 |
| K₂O | 0-1.5 |
| ∑Na₂O+K₂O | 0.2-2.0 |
| MgO | 0-2.0 |
| CaO | 0-1.5 |
| SrO | 0-1.5 |
| BaO | 0-2.5 |
| ZnO | 0-2.5 |
| B₂O₃ | 0-1.0 |
| Al₂O₃ | 19-25 |
| SiO₂ | 55-69 |
| TiO₂ | 1.4-2.7 |
| ZrO₂ | 1.3-2.5 |
| SnO₂ | 0,1-0.4 |
| ∑SnO₂+TiO₂ | < 2.7 |
| P₂O₅ | 0-3.0 |
| ∑ZrO₂+0.87 (TiO₂+SnO₂) | 3.65-4.3 |
| Fe₂O₃ | ≤ 0.04 |
| Nd₂O₃ | 0.01-0.4 |
| CoO | 0-0.004, |
wherein the glass-ceramic comprising beta-quartz solid solutions as the predominant crystal phase, having a neutral colour, having a haze of less than 1% according to ASTM D 1003 and
wherein SnO₂ is applied as refining agent in combination with a high-temperature refining process with temperatures above 1700°C,
if appropriate with additions of chemical refining agents such as As₂O₃, Sb₂O₃ and CeO₂, and refining additives such as sulphate, chloride and fluoride compounds in total contents of up to 2.0% by weight.

2. Glass ceramic according to Claim 1, converted from a lithium aluminosilicate glass having a content (in % by weight, based on oxide) of:
| | |
|---|---|
| Li₂O | 3.2-4.3 |
| Na₂O | 0.2-1.0 |
| K₂O | 0-0.8 |
| ∑Na₂O+K₂O | 0.3-1.5 |
| MgO | 0.1-1.5 |
| CaO | 0-1.0 |
| SrO | 0-1.0 |
| ZnO | 0-2.0 |
| B₂O₃ | 0-1.0 |
| Al₂O₃ | 19-24 |
| SiO₂ | 60-68 |
| TiO₂ | 1.4-2.7 |
| ZrO₂ | 1.3-2.2 |
| SnO₂ | 0,1-0.3 |
| ∑SnO₂+TiO₂ | < 2.7 |
| P₂O₅ | 0-1.5 |
| Nd₂O₃ | 0.02-0.3 |
| CoO | 0-0.003, |
wherein SnO₂ is applied as refining agent in combination with a high-temperature refining process with temperatures above 1700°C,
if appropriate with additions of chemical refining agents such as As₂O₃, Sb₂O₃ and CeO₂, and refining additives such as sulphate, chloride and fluoride compounds in total contents of up to 1.5% by weight.

3. Glass ceramic according to either of the preceding claims, converted from a lithium aluminosilicate glass having a MgO content of < 0.8, preferably of < 0.6% by weight.

4. Glass-ceramic, converted from a lithium aluminosilicate glass having a composition to one of the preceding claims, having a content of Nd₂O₃ < 0.2% by weight, CoO < 0.002% by weight and a coefficient of thermal expansion α_{20/700} of 0±0.5·10⁻⁶/K, preferably 0±0.3·10⁻⁶/K, a light transmission of greater than 80% given a thickness of 4 mm, and a chroma in the CIELAB colour system of C* < 3.5.

5. Use of the transparent glass-ceramic according to one of the preceding claims, as fireproof glass, a chimney inspection window, a baking oven inspection window, a cooking plate with a coating on the underside and a cover in the lighting sector.

## Revendications

1. Vitrocéramique transparente obtenue à partir d'un verre à l'aluminosilicate de lithium présentant une composition de :
| | |
|---|---|
| Li₂O | 3,0 - 4,5 |
| Na₂O | 0 - 1,5 |
| K_{z}O | 0 - 1,5 |
| ∑Na₂O+K₂O | 0,2 - 2,0 |
| MgO | 0 - 2,0 |
| CaO | 0 - 1,5 |
| SrO | 0 - 1,5 |
| BaO | 0 - 2,5 |
| ZnO | 0 - 2,5 |
| B₂O₃ | 0 - 1,0 |
| Al₂O₃ | 19 - 25 |
| SiO₂ | 55 - 69 |
| TiO₂ | 1,4 - 2,7 |
| ZrO₂ | 1,3 - 2,5 |
| SnO₂ | 0,1 - 0,4 |
| ∑SnO₂+TiO₂ | < 2,7 |
| P₂O₅ | 0 - 3,0 |
| ∑ZrO₂+0,87 (TiO₂+SnO₂) | 3, 65 - 4,3 |
| Fe₂O₃ | ≤ 0,04 |
| Nd₂O₃ | 0,01 - 0,4 |
| CoO | 0 - 0,004 |
la vitrocéramique ayant comme phase cristalline prédominante des cristaux à haute teneur en quartz, une turbidité mesurée selon ASTM D 1003 inférieure à 1 % et une teinte neutre,
SnO₂ étant utilisé en tant qu'agent d'affinage en association avec un affinage à haute température au-dessus de 1700 °C,
éventuellement avec ajout d'agents chimiques d'affinage tels qu'As₂O₃, Sb₂O₃, CeO₂ et d'additifs d'affinage tels que des composés de sulfate, de chlorure et de fluorure à une teneur totale pouvant atteindre 2,0 % en poids.

2. Vitrocéramique selon la revendication 1, obtenue à partir d'un verre à l'aluminosilicate de lithium présentant les teneurs suivantes en oxydes (% en poids)
| | |
|---|---|
| Li₂O | 3,2 - 4,3 |
| Na₂O | 0,2 - 1,0 |
| K_{z}O | 0 - 0,8 |
| ∑Na₂O+K₂O | 0,3 - 1,5 |
| MgO | 0,1 - 1,5 |
| CaO | 0 - 1,0 |
| SrO | 0 - 1,0 |
| BaO | 0 - 2,5 |
| ZnO | 0 - 2,0 |
| Al₂O₃ | 19 - 24 |
| SiO₂ | 60 - 68 |
| TiO₂ | 1,4 - 2,7 |
| ZrO₂ | 1,3 - 2,2 |
| SnO₂ | 0,1 - 0,3 |
| ∑SnO₂+TiO₂ | < 2,7 |
| P₂O₅ | 0 - 1,5 |
| Nd₂O₃ | 0, 02 - 0,3 |
| CoO | 0 - 0,003 |
SnO₂ étant utilisé en tant qu'agent d'affinage en association avec un affinage à haute température au-dessus de 1700 °C,
éventuellement avec ajout d'agents chimiques d'affinage tels qu'As₂O₃, Sb₂O₃, CeO₂ et d'additifs d'affinage tels que des composés de sulfate, de chlorure ou de fluorure à une teneur totale qui peut atteindre 1,5 % en poids.

3. Vitrocéramique selon l'une des revendications précédentes, obtenue à partir d'un verre à l'aluminosilicate de lithium présentant une teneur en MgO < 0,8 et de préférence < 0,6 % en poids.

4. Vitrocéramique obtenue à partir d'un verre à l'aluminosilicate de lithium présentant une composition selon l'une des revendications précédentes, des teneurs en Nd₂O₃ < 0,2 % en poids et en CoO < 0,002 % en poids, un coefficient de dilatation thermique α_{20/700} de 0 ± 0,5.10⁻⁶/K, de préférence de 0 ± 0,3.10⁻⁶/K, une transmission de la lumière supérieure à 80 % pour une épaisseur de 4 mm et une chromaticité dans le système de couleur CIELAB C* < 3,5.

5. Utilisation de la vitrocéramique selon l'une des revendications précédentes comme vitrage anti-feu, vitrage de foyer, vitrage de four de cuisson, surface de cuisson revêtue sur son côté inférieur et couvercle dans le secteur de l'éclairage.
